# FASCICULE DE BREVET EUROPEEN

(11) **EP 0 609 116 B1**
(45) Date de publication et mention de la délivrance du brevet: **29.05.1996**
(21) Numéro de dépôt: 94400125.4
(22) Date de dépôt: 20.01.1994
(51) Int. Cl.: C03C 23/00

(54) **Procédé pour le traitement de surface d'articles en cristal et articles ainsi obtenus**
Verfahren zur Oberflächenbehandlung von Bleikristallglasgegenständen und dadurch hergestellte Gegenstände
Process for the treatment of the surface of crystal articles and articles thus obtained

(30) Priorité: 26.01.1993 FR 9300709
(43) Date de publication de la demande: 03.08.1994
(73) Titulaire: LALIQUE S.A., F-75008 Paris (FR)
(72) Inventeur: Cordie, Paul, F-67330 Bouxwiller (FR)
(74) Mandataire: Phélip, Bruno

(56) Documents cités:
- DE-A- 4 102 886
- CHEMICAL ABSTRACTS, vol. 99, no. 14, 1983, Columbus, Ohio, US; abstract no. 109644h, page 265 ;
- CHEMICAL ABSTRACTS, vol. 114, no. 4, 28 Janvier 1991, Columbus, Ohio, US; abstract no. 28896t, page 299 ;
- CHEMICAL ABSTRACTS, vol. 107, no. 24, Décembre 1987, Columbus, Ohio, US; abstract no. 221961u, page 276 ;

## Description

La présente invention appartient au domaine du traitement de surface d'articles en cristal.

On sait que certains verres sont obtenus à partir de mélanges d'oxydes minéraux, parmi lesquels se trouvent des oxydes de métaux lourds, tels que le plomb. En particulier, le cristal contient par définition 24 % d'oxyde de plomb au moins. Dans la présente description, on utilisera l'expression "cristal" pour désigner des verres au plomb, quelle que soit leur teneur en plomb et, d'une façon générale, tout verre contenant des métaux lourds.

Lorsque le verre est en contact avec des produits, en particulier alimentaires, on observe une migration de certains éléments minéraux du verre, qui, bien que présentant une nature vitreuse, n'est pas totalement inerte chimiquement. Ce phénomène a été observé dans des récipients en verre contenant des liquides, tels que de l'eau et plus encore des liquides à pH acide. Le cas des récipients en cristal a fait l'objet d'études poussées, en raison de la migration du plomb et des prétendus risques qu'elle peut présenter pour les consommateurs. Des réglementations apparaissent dans certains pays pour limiter la teneur maximale en plomb des boissons après contact avec des récipients en cristal. A titre d'exemple, la valeur au-delà de laquelle une indication spécifique devient obligatoire a été fixée, en Californie (proposition 65), à 25 ppb (parties par billion), mesurée selon la norme ISO 7086. Il convient également de mentionner la norme en vigueur aux USA, fixant à 300 ppb la teneur maximale en plomb présent dans les boissons alcoolisées.

La méthode de mesure de la migration du plomb est standardisée sous la norme ISO 7086, laquelle consiste à mesurer la teneur en plomb dans une solution d'acide acétique dilué à 4 % après un temps de séjour de 24 heures à température ambiante de 22°C.

On s'efforce donc à l'heure actuelle de trouver des procédés de traitement en surface du cristal, pour bloquer la migration des métaux lourds et spécialement du plomb, vers les produits avec lesquels le cristal est en contact. Il en est ainsi de très nombreux articles, du genre des gobelets, des verres, et de toutes sortes de récipients, tels que les flacons, carafes, brocs etc.

On recherche aussi des procédés de traitement permettant d'améliorer la conservation de l'état de surface des articles, qui subissent des lavages fréquents dans les machines à laver automatiques pour la vaisselle.

A titre de références bibliographiques illustrant l'état de la technique dans le domaine de l'invention, spécialement la migration du plomb dans les produits en contact avec le cristal, on peut citer Ceramic Bulletin volume 55 n°5 (1976) pages 508 et suivantes, qui montre l'influence du pH du liquide sur la migration du plomb. Un article du Journal of the Am. Ceramic Society Volume 61 n°7,8 (1978) pages 292 et suivantes est consacré à une étude théorique de la détermination de l'énergie d'activation de l'échange ionique entre les ions H⁺ du liquide et les ions Pb⁺⁺^{.}

Afin de limiter la migration du plomb dans les produits, surtout les liquides mis en contact avec les articles en cristal, plusieurs techniques ont déjà été décrites.

Il a tout d'abord été envisagé de modifier la composition du verre lui-même. Par exemple, il a été proposé de modifier la teneur en Al₂ O₃ d'un cristal : voir par exemple SCHAEFFER et al dans Berichte der deutschen Keramischen Gesellschaft Tome 53 (1976) n°2 pages 43-78, qui ont noté que l'introduction de 3 % de Al₂ O₃ dans un cristal suffisait à réduire d'un facteur 10 la vitesse et la quantité de plomb migrant. Cependant, ce type de technique n'est pas facile à mettre en oeuvre, car il est nécessaire de modifier complètement les compositions de verre, ce qui entraîne des coûts élevés, en raison des perturbations apportées à la fabrication.

Une autre technique consiste à conserver la composition traditionnelle du verre ou du cristal, mais à effectuer un traitement de surface pour bloquer la migration du plomb. On peut citer par exemple la demande de brevet EP-0 458 713 qui consiste à enduire la surface à traiter d'une suspension de kaolin, pour fournir une pellicule superficielle, qui est ensuite traitée à haute température, cette pellicule étant, après refroidissement de l'article, éliminée par lavage à l'eau puis au sable ou par des ultrasons. Ce document contient d'ailleurs un exposé assez complet des problèmes techniques qui se posent dans le domaine de l'invention. L'inconvénient du procédé décrit dans cette demande de brevet EP-0 458 713 réside dans sa mise en oeuvre, qui nécessite le coulage d'une barbotine sur la surface à traiter, mais surtout dans les opérations d'élimination de la pellicule, qui sont longues et coûteuses et peuvent de plus dégrader l'état de surface de l'article.

Le document DE-A-41 02 886 décrit le traitement d'articles en verre pour limiter le transfert des métaux lourds qu'ils contiennent. Le procédé prévoit l'utilisation d'un agent d'extraction en solution aqueuse et à des températures faibles, notamment inférieures à 100°c.

D'autres types de traitement existent, tels que les traitements à l'acide sulfurique concentré, mais ceux-ci ne donnent de résultats ni satisfaisants ni stables dans le temps.

La technique de traitement de surface par du sulfate d'ammonium est déjà ancienne, et a fait l'objet de plusieurs communications récentes, en particulier à l'International Crystal Federation (ICF) à son congrès de 1992 (Technical Exchange Conference). De tels traitements au sulfate d'ammonium, d'après leurs auteurs, donnent de bons résultats pour freiner la migration du plomb.

La société demanderesse s'est fixée pour but de trouver un procédé perfectionné qui appartient à la technique générale du traitement de surface des articles en verre contenant des métaux lourds, facile à mettre en oeuvre et fournissant des résultats jamais atteints jusqu'à présent dans le blocage de la migration du plomb dans les produits, spécialement les liquides, qui sont mis en contact avec lesdits articles.

Ainsi, l'invention a pour objet un procédé pour le traitement de surface d'articles en cristal, selon lequel on met en contact la surface de l'article à traiter avec un gaz réactif provenant de la vaporisation de sulfate(s) d'ammonium et d'un métal choisi parmi l'aluminium et le fer, à température élevée, ne dépassant pas la température de ramollissement du cristal et, après refroidissement de l'article, on lave au moins la surface traitée pour en éliminer tout résidu pulvérulent.

Selon une première forme de réalisation de l'invention, l'agent de traitement est le sulfate d'ammonium et d'aluminium de formule NH₄ Al (SO₄)₂. Ainsi qu'il est bien connu, ce produit se présente généralement sous une forme hydratée. L'invention couvre n'importe quelle forme, dès lors qu'elle peut se vaporiser aux températures de traitement indiquées ci-après. De bons résultats pratiques ont été obtenus avec le produit NH₄ Al (SO₄)₂, 12H₂O.

Selon une variante de réalisation, on peut utiliser, au lieu du sulfate d'ammonium et d'aluminium, un mélange de sulfate d'ammonium et de sulfate d'aluminium. Ce dernier mode de réalisation peut être mis en oeuvre, si l'on dispose séparément du sulfate d'aluminium et du sulfate d'ammonium.

Selon une autre forme de réalisation, l'agent de traitement est le sulfate d'ammonium et de fer. On peut utiliser un sel de fer divalent de formule (NH₄)₂ Fe (SO₄)₂ ou trivalent de formule NH₄ Fe(SO₄)₂. De même que le sulfate d'ammonium et d'aluminium, ces sulfates d'ammonium et de fer se présentent souvent sous forme hydratée, par exemple (NH₄)₂ Fe (S0₄)₂, 6H₂0 et NH₄ Fe (SO₄)₂, 12H₂0. Il doit cependant être entendu que le procédé de l'invention peut mettre en oeuvre toutes formes hydratées de tels sulfates susceptibles de se vaporiser aux températures de traitement.

En variante, des mélanges de sulfate d'ammonium et de sulfate de fer (Fe II ou Fe III) peuvent être également utilisés.

Le procédé de l'invention est mis en oeuvre à température élevée, en tout cas supérieure à la température de transition vitreuse, mais ne dépassant pas la température de ramollissement du cristal. Dans le cas d'un cristal, dont la température de ramollissement est de l'ordre de 490°-500°C, le procédé de l'invention peut être appliqué à une température supérieure à 470°C, sans dépasser la température de ramollissement, notamment dans une plage de 470-490°C environ. Il va sans dire que le choix de la température de traitement doit être optimisé en tenant compte de la nature du verre à traiter et également de la tenue mécanique de l'article à ladite température.

Il convient de maintenir la surface à traiter de l'article en cristal, en contact avec les gaz provenant de la vaporisation de l'agent de traitement pendant un temps suffisant pour que le gaz vienne réagir avec ladite surface. On constate la formation d'un dépôt blanchâtre sur les surfaces ainsi traitées. Là encore, la durée du traitement peut être adaptée par l'homme du métier à l'article à traiter, à la température finalement retenue pour le traitement et aux autres paramètres du procédé. Dans la pratique, pour le cristal, on a constaté que de bons résultats étaient obtenus avec une durée de traitement de quinze minutes à trois heures à une température de l'ordre de 475-480°C, une fois que cette température a été atteinte. Cette période correspond au palier de traitement et ne comprend ni la montée en température de l'article ni son refroidissement.

Pour la mise en oeuvre du procédé selon l'invention, il convient de travailler en enceinte fermée, en exposant la ou les surfaces des articles à traiter à l'action du gaz réactif provenant de l'agent de traitement. Les installations de traitement sont adaptées à la forme des articles à traiter. En effet, comme déjà indiqué ci-dessus, l'invention s'applique à tous les articles en cristal, dont certaines surfaces viennent, lors de l'utilisation, en contact avec des aliments ou des boissons : il peut donc s'agir de toutes sortes d'articles, tels que assiettes, bols, plats, flacons, carafes, brocs, verres, sans que cette liste soit limitative.

Pour certains articles, il peut être nécessaire de prévoir une enceinte fermée contenant des supports pour lesdits articles, ainsi que des moyens pour vaporiser l'agent de traitement à l'intérieur de l'enceinte.

Mais on peut aussi mettre à profit la forme même des articles à traiter pour constituer grâce à elle une enceinte fermée et simplifier ainsi les conditions pratiques du traitement. C'est le cas par exemple des articles comportant une ouverture, comme les verres, les flacons, les carafes etc... L'ouverture de ces articles est disposée à une extrémité opposée à leur base. En vue du traitement selon l'invention, de tels articles sont simplement posés avec l'ouverture à leur partie supérieure, celle-ci s'étendant dans un plan sensiblement horizontal. La surface à traiter, dans ce cas, correspond à l'intérieur de l'article. Etant donné que l'agent de traitement se présente sous forme de poudre, il est commode d'en déposer directement la quantité voulue au fond d'un tel article, puis d'obturer l'ouverture avec une plaque en un matériau résistant à la température de traitement, par exemple en graphite, qui est simplement posée à la partie supérieure de l'article. On a obtenu les meilleurs résultats de tenue mécanique de la plaque sur l'ouverture en équipant ladite plaque d'un organe, qui pénétre à l'intérieur de l'article et évite les déplacements intempestifs de la plaque sur l'ouverture.

Une variante qui a également donné de bons résultats consiste à prévoir une plaque de fermeture en graphite soutenant une tige qui plonge à l'intérieur de l'article et porte une nacelle dans laquelle l'agent de traitement pulvérulent est déposé.

Quel que soit le mode de réalisation adopté, l'ensemble contenant la poudre est fermé par la plaque, porté ensuite à la température de traitement, et maintenu à cette température pendant une durée suffisante.

Au cours du traitement, la poudre se vaporise et le gaz ainsi formé vient réagir avec les surfaces exposées de l'article en verre ou en cristal. Un dépôt blanchâtre se forme sur les parois traitées.

Après refroidissement, on note la présence de poudre résiduelle d'agent de traitement, qui ne s'est pas sublimée.

Pour ce qui est de la quantité d'agent de traitement à mettre en oeuvre, celle-ci doit être adaptée à l'étendue des surfaces à traiter. Et il convient de choisir une quantité en excès pour être certain que la quantité de gaz réactif formé par vaporisation sera suffisante pour assurer la protection désirée des parois ou surfaces à traiter. Il a été néanmoins constaté que la quantité introduite d'agent de traitement n'est pas un paramètre caractéristique essentiel du procédé. A titre indicatif, pour le traitement de carafes ou flacons en cristal ayant un volume intérieur d'environ 0,3 l, des quantités d'agent de traitement de l'ordre de 150-200 mg se sont avérées convenables dans la pratique. L'homme du métier peut, sans difficulté, optimiser la quantité d'agent de traitement pulvérulent à mettre en oeuvre, dans chaque cas particulier.

La dernière étape du procédé de l'invention consiste à éliminer les dépôts blanchâtres présents sur les surfaces traitées. Selon une caractéristique particulièrement avantageuse, il suffit d'un simple lavage à l'eau ou à l'eau savonneuse pour éliminer tout résidu pulvérulent et rendre ainsi toute sa clarté à la surface de l'article en verre ou en cristal. Grâce au choix de l'agent de traitement selon l'invention, l'opération de lavage final est très simplifiée par rapport à certains procédés connus de l'art antérieur.

Le traitement de l'invention peut être opéré sur des articles préalablement fabriqués, c'est-à-dire déjà recuits. Ainsi, ce traitement peut partir d'articles à température ambiante, tels qu'ils sont obtenus après refroidissement dans les conditions de fabrication usuelles. Mais il est également possible d'appliquer le traitement à des articles en cours de fabrication, qui possèdent encore une température élevée, et avant leur refroidissement final.

Les résultats obtenus par le procédé de l'invention sont en tous points remarquables. Les essais réalisés démontrent que la protection des articles contre la migration de certains métaux lourds, plus particulièrement le plomb, vers les produits alimentaires avec lesquels ils sont en contact, est bloquée à un taux jamais atteint jusqu'à présent et très largement supérieur à celui des mêmes articles traités dans les mêmes conditions avec le sulfate d'ammonium seul. Grâce à l'invention, la quantité de plomb n'est pas détectable ou est pratiquement insignifiante, même après des durées de contact très prolongées. De telles quantités sont très largement inférieures à celles faisant l'objet des réglementations récentes les plus sévères. Dans le cas du traitement du cristal, la valeur de la quantité de plomb susceptible de subir une migration ne dépasse pas 5 ppb.

Un autre avantage du procédé de l'invention est qu'il peut être mis en pratique dans une large plage de température, par exemple entre 470° et 490°C. Au contraire, un inconvénient extrêmement important d'autres agents connus de traitement, tels que le sulfate d'ammonium, réside en ce qu'ils ne sont actifs qu'à une température très précise. Cette température d'une part est difficile à contrôler et d'autre part, trop proche de la température de ramollissement de l'article à traiter. Le sulfate d'ammonium n'est donc pas pratiquement utilisable car, en premier lieu, les résultats de protection sont insuffisants ou aléatoires et, en second lieu, la température de traitement à observer entraîne une déformation inacceptable des articles en cristal.

L'invention sera encore illustrée sans être aucunement limitée par la description et les exemples qui suivent, faite en référence aux dessins annexés sur lesquels :
Figure 1 est une coupe axiale d'un dispositif pour la mise en oeuvre du procédé de l'invention.
Figure 2 est une coupe axiale similaire d'une variante de dispositif pour la mise en oeuvre du procédé de l'invention.

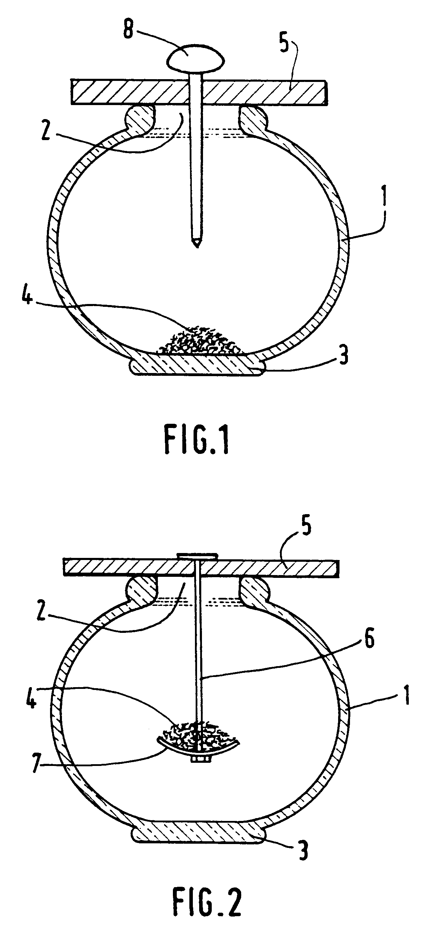

La figure 1 représente schématiquement, en coupe axiale, un article en cristal, désigné par la référence générale 1 du genre carafe ou flacon, comportant une ouverture 2 à son extrémité supérieure et une embase 3. Dans ce mode de réalisation, l'agent de traitement pulvérulent 4 est simplement déposé au fond de la carafe 1. Une plaque 5 en graphite, est posée à la partie supérieure de la carafe 1 pour obturer l'ouverture 2. Un organe ou clou 8, traversant la plaque 5 et pénétrant dans l'article 1 à travers l'ouverture 2 empêche la plaque 5 de glisser latéralement.

Dans la variante de réalisation représentée à la figure 2, les mêmes chiffres de référence désignent les mêmes éléments. Dans ce cas, l'agent de traitement pulvérulent 4 est déposé dans une nacelle 7 suspendue par une tige 6 à la plaque en graphite 5.

Dans les exemples qui suivent, on a réalisé des traitements conformes au procédé de l'invention sur des carafes de type général représenté aux figures 1 et 2, conformément à l'un et à l'autre des modes de réalisation illustrés respectivement dans lesdites figures.

### Exemple 1

A titre d'agent pulvérulent, on a utilisé du sulfate d'ammonium et d'aluminium, à raison de 200 mg, le volume intérieur des carafes étant de l'ordre de 0,3 l. Une fois le sulfate d'ammonium et d'aluminium mis en place, que ce soit dans le fond de la carafe comme à la figure 1 ou dans la nacelle suspendue à la plaque en graphite comme à la Figure 2, les carafes ont été fermées avec la plaque, puis l'ensemble a été mis à chauffer dans une étuve. Etant donné que les carafes sont en cristal, on a atteint la température de traitement de 480°C qui a été maintenue pendant deux heures. On a laissé ensuite refroidir les carafes, on a enlevé les plaques de fermeture en graphite puis nettoyé l'intérieur des carafes par un simple lavage à l'eau savonneuse, afin d'éliminer les dépôts blanchâtres présents sur la paroi.

### Exemple 1a

Dans une première série d'essais, on a comparé les résultats obtenus selon l'invention d'une part avec ceux des carafes identiques non traitées et d'autre part avec ceux des carafes traitées uniquement avec du sulfate d'ammonium NH₄ (SO₄)₂ selon l'art antérieur. Dans ces essais, on a appliqué la norme ISO 7086, en effectuant la mesure de la quantité de plomb ayant migré à l'aide d'un spectromètre atomique en phase vapeur.

Les résultats sont rassemblés dans le tableau I.

**TABLEAU I**

| Taux de Pb ayant migré Norme ISO 7086 | |
|---|---|
| Carafes non traitées | 190 ppb |
| Carafes traitées au sulfate d'ammonium seul | 30 ppb |
| Carafes traitées au sulfate d'ammonium et d'aluminium | non détectable < 2 ppb |

### Exemple 1b

Dans une autre série d'essais, on a utilisé un protocole de mesure inspiré de la norme ISO 7086 mais correspondant à un traitement accéléré, impliquant la mise en contact d'une solution d'acide acétique à 4 % à 62°C pendant neuf jours. On admet que ce genre d'essai est équivalent à une durée de contact de pratiquement 20 mois à température ambiante. Les résultats obtenus dans ce traitement accéléré sont rassemblés au tableau II.

**TABLEAU II**

| Taux de Pb ayant migré - Traitement accéléré | |
|---|---|
| Carafes non traitées | 2 390 ppb |
| Carafes traitées au sulfate d'ammonium et d'aluminium | 5 ppb |

### Exemple 1c

On a réalisé une autre série d'essais dans des conditions semblables à celles des essais rapportés au Tableau I, mais à diverses températures. Les résultats sont rapportés dans le Tableau III.

**TABLEAU III**

| Taux de Pb ayant migré Norme ISO 7086 | | | | | |
|---|---|---|---|---|---|
| Température | 430°C | 475°C | 490°C | 500°C | 515°C |
| Sulfate d'ammonium | 265ppb | 64 | non détectable | 30 | 74 |
| Sulfate d'aluminium et d'ammonium | 150ppb | 14 | non détectable | non détectable | 23 |

Les résultats ci-dessus montrent que le traitement selon l'invention au sulfate d'aluminium et d'ammonium réduit très notablement le taux de migration du plomb par rapport aux articles non traités. On notera que le procédé de l'invention peut être mis en oeuvre dans une plage de températures plus large qu'avec le sulfate d'ammonium seul. A la seule température (490°C) à laquelle le sulfate d'ammonium fournit un résultat satisfaisant pour la migration du plomb, les articles en cristal commencent à ramollir de sorte qu'ils sont déformés après le traitement.

On a également constaté dans la mise en oeuvre pratique du procédé de l'invention que, pour retrouver son état initial et la pureté du cristal, la carafe ne devait subir qu'un simple lavage à l'eau savonneuse pour en effacer toute trace visible.

### Exemple 2

On a obtenu des résultats sensiblement équivalents à ceux de l'Exemple 1 en remplaçant le sulfate d'ammonium et d'aluminium par un mélange de 130 mg de sulfate d'ammonium et 130 mg de sulfate d'aluminium.

### Exemple 3

On a procédé comme à l'Exemple 1, mais en utilisant, à titre d'agent de traitement, le sulfate d'ammonium et de fer sous la forme NH₄ Fe (SO₄)₂ à raison de 150 mg par essai, les conditions de traitement étant par ailleurs identiques à celles de l'Exemple 1. On a comparé les résultats obtenus à eux fournis par le sulfate d'ammonium seul d'une part, et par le sulfate d'ammonium et d'aluminium d'autre part. Le tableau IV rassemble les résultats après une durée de traitement de 2h aux températures indiquées, la valeur de la migration du plomb, exprimée en ppb, ayant été mesurée selon la norme ISO 7086.

**TABLEAU IV**

| Taux de Pb ayant migré - Norme ISO 7086 | | | |
|---|---|---|---|
| | (NH₄)₂S0₄ | NH₄ Al(SO₄)₂ | NH₄ Fe(SO₄)₂ |
| 450°C | 22 | 2 | 5 |
| 460°C | 10 | 5 | 3 |
| 470°C | 107 | 8 | 2 |
| 480°C | 41 | 1 | 1 |
| 490°C | 171 | 12 | 10 |

L'invention n'est pas limitée aux modes de réalisation qui ont été décrits ci-dessus à titre d'exemples. Le nouveau procédé donne d'excellents résultats pour éviter la migration de métaux lourds des verres en contact avec les produits, tels que les liquides , en particulier à pH acide. Mais on a constaté également que le procédé permet d'améliorer la durabilité chimique des articles traités, ce qui est particulièrement important pour éviter leur détérioration progressive par des passages répétés dans les lave-vaisselle automatiques.

## Revendications

1. Procédé pour le traitement de surface d'articles en cristal, selon lequel on met en contact la surface de l'article à traiter avec un gaz réactif provenant de la vaporisation de sulfate(s) d'ammonium et d'un métal choisi parmi l'aluminium et le fer, à température élevée, ne dépassant pas la température de ramollissement du cristal et, après refroidissement de l'article, on lave au moins la surface traitée pour en éliminer tout résidu pulvérulent.

2. Procédé selon la revendication 1 caractérisé en ce que l'agent de traitement est le sulfate d'ammonium et d'aluminium NH₄ Al (SO₄)₂, notamment sous forme hydratée, par exemple NH₄ Al (SO₄)₂, 12H₂O.

3. Procédé selon la revendication 1 caractérisé en ce que l'agent de traitement est un mélange de sulfate d'ammonium et de sulfate d'aluminium.

4. Procédé selon la revendication 1 caractérisé en ce que l'agent de traitement est le sulfate d'ammonium et de fer, de formule (NH₄)₂ Fe (SO₄)₂ ou NH₄ Fe(SO₄)₂, notamment sous forme hydratée, par exemple (NH₄)₂ Fe(SO₄)₂, 6H₂O ou NH₄ Fe(SO₄)₂, 12H₂O.

5. Procédé selon la revendication 4 caractérisé en ce qu'on utilise un mélange de sulfate d'ammonium et de sulfate de fer II ou III.

6. Procédé selon l'une quelconque des revendications 1 à 5, caractérisé en ce que la température de traitement est supérieure à la température de transition vitreuse et inférieure à la température de ramollissement du cristal.

7. Procédé selon l'une quelconque des revendications 1 à 6 caractérisé en ce que la température de traitement est dans une gamme de 470-490°C.

8. Procédé selon l'une quelconque des revendications 1 à 7 caractérisé en ce que la température de traitement, après avoir été atteinte, est maintenue pendant une durée de 15 minutes à 3 heures.

9. Procédé selon l'une quelconque des revendications 1 à 8 caractérisé en qu'il est mis en oeuvre dans une enceinte fermée contenant des supports pour les articles en cristal ainsi que des moyens pour vaporiser l'agent de traitement à l'intérieur de l'enceinte.

10. Procédé selon l'une quelconque des revendications 1 à 8 caractérisé en ce qu'on traite des articles comportant une ouverture, comme les verres, flacons, carafes, brocs et autres articles similaires, auquel cas on dépose à l'intérieur dudit article la quantité désirée d'agent de traitement sous forme de poudre, on obture l'ouverture avec une plaque en un matériau résistant à la température de traitement, par exemple en graphite, qui est posée à la partie supérieure de l'article, en étant éventuellement traversée par un organe de maintien, qui pénétre à l'intérieur de l'article, après quoi on porte l'ensemble à la température de traitement, afin de vaporiser la poudre.

11. Procédé selon l'une quelconque des revendications 1 à 8 caractérisé en ce qu'on traite des articles comportant une ouverture, comme les verres, flacons, carafes, brocs et autres articles similaires, auquel cas on prévoit une plaque en un matériau résistant à la température de traitement, par exemple en graphite, qui est posée à la partie supérieure de l'article pour obturer l'ouverture et soutient une tige, laquelle plonge à l'intérieur de l'article et porte une nacelle dans laquelle l'agent de traitement pulvérulent est déposé, après quoi l'ensemble est chauffé pour vaporiser la poudre.

12. Procédé selon l'une quelconque des revendications 1 à 11 caractérisé en ce que, une fois l'article refroidi, on élimine les dépôts blanchâtres, présents sur la ou les surface(s) traitées, par un simple lavage à l'eau ou à l'eau savonneuse, l'état de la surface traitée et lavée étant aussi pur que l'état initial.

13. Articles en cristal caractérisés en ce que la valeur de la quantité de plomb ayant migré ne dépasse pas 5 ppb selon la norme ISO 7086.

## Claims

1. Process for the surface treatment of articles made from crystal, characterized in that the surface of the article to be treated is brought into contact with a reactive gas produced by the vaporization of sulfate(s) of ammonium and of a metal chosen from aluminum and iron, at high temperature not exceeding the softening temperature of the crystal and, after the article is cooled, at least the treated surface is washed to remove any powdery residue.

2. Process according to claim 1, characterized in that the treatment agent is ammonium aluminum sulfate, NH₄ Al (SO₄)₂, particularly in hydrate form, for example NH₄ Al (SO₄)₂,12H₂0.

3. Process according to claim 1, characterized in that the treatment agent is a mixture of ammonium sulfate and aluminum sulfate.

4. Process according to claim 1, characterized in that the treatment agent is ammonium iron sulfate having the formula (NH₄)₂ Fe (SO₄)₂ or NH₄ Fe (SO₄)₂, particularly in hydrate form, for example (NH₄)₂ Fe (SO₄)₂,6H₂0 and NH₄ Fe (SO₄)₂,12H₂O.

5. Process according to claim 4, characterized in that a mixture of ammonium sulfate and iron II or III sulfate is used.

6. Process according to any one of claims 1 to 5, characterized in that the treatment temperature is higher than the glass transition temperature and inferior to the softening temperature of the crystal.

7. Process according to any one of claims 1 to 6, characterized in that the treatment temperature lies in the range of about 470-490°C.

8. Process according to any one of claims 1 to 7, characterized in that the treatment temperature, after having been reached, is maintained for a period of 15 minutes to 3 hours.

9. Process according to any one of claims 1 to 8, characterized in that it is carried into practice in a closed enclosure containing supports for the crystal articles as well as means for vaporizing the treatment agent inside the enclosure.

10. Process according to one of claims 1 to 8, characterized in that articles are treated which comprise an opening, such as glasses, flasks, carafes, jugs and other similar articles, in which case the desired amount of treatment agent in powder form is deposited inside the said article to be treated, the opening then being closed with a plate made from a material that is resistant to the treatment temperature, for example graphite, and which is placed on the upper part of the article, said plate possibly being traversed by a holding device which penetrates inside the article, after which the assembly is heated to the treatment temperature in order to vaporize the powder.

11. Process according to any one of claims 1 to 8 characterized in that articles are treated which comprise an opening, such as glasses, flasks, carafes, jugs and other similar articles, in which case a plate is provided made from a material that is resistant to the treatment temperature, for example graphite, which is placed at the upper part of the article to close the opening and which supports a rod which hangs downwardly inside the article and which carries a pod in which the powdery treatment agent is deposited, after which the assembly is heated in order to vaporize the powder.

12. Process according to any one of claims 1 to 11, characterized in that once the article has cooled, the whitish deposits present on the treated surface(s) are removed by simply washing in water or soapy water, the state of the treated and washed suface being as pure as the initial state.

13. Crystal articles characterized in that the value of the quantity of lead having migrated does not exceed 5 ppb in accordance with the ISO 7086 standard.

## Patentansprüche

1. Verfahren zur Oberflächenbehandlung von Artikeln aus Kristall, bei dem man die Oberfläche des zu behandelnden Artikels mit einem reaktiven Gas in Kontakt bringt, das aus der Verdampfung von Sulfat(en) von Ammonium und einem der beiden Metalle Aluminium und Eisen bei hoher, die Erweichungstemperatur des Kristalls nicht überschreitender Temperatur herrührt, und bei dem man nach Abkühlen des Artikels wenigstens die behandelte Oberfläche abwäscht, um jegliche pulverförmige Reste von ihr zu beseitigen.

2. Verfahren nach Anspruch 1, dadurch gekennzeichnet, daß das behandelnde Reagens das Ammonium-Aluminium-Sulfat NH₄ Al (SO₄)₂, insbesondere in Hydratform wie zum Beispiel NH₄ Al (SO₄)₂· 12H₂O, ist.

3. Verfahren nach Anspruch 1, dadurch gekennzeichnet, daß das behandelnde Reagens eine Mischung aus Ammoniumsulfat und Aluminiumsulfat ist.

4. Verfahren nach Anspruch 1, dadurch gekennzeichnet, daß das behandelnde Reagens das Ammonium-Eisen-Sulfat der Formel (NH₄)₂ Fe (SO₄)₂ oder NH₄ Fe (SO₄)₂, insbesondere in Hydratform wie zum Beispiel (NH₄)₂ Fe (SO₄)₂·6H₂O oder NH₄ Fe (SO₄)₂·12H₂O, ist.

5. Verfahren nach Anspruch 4, dadurch gekennzeichnet, daß man eine Mischung von Ammoniumsulfat und Eisen(II)- oder -(III) -Sulfat verwendet.

6. Verfahren nach einem der Ansprüche 1 bis 5, dadurch gekennzeichnet, daß die Behandlungstemperatur höher als die Glasübergangstemperatur und niedriger als die Erweichungstemperatur des Kristalls ist.

7. Verfahren nach einem der Ansprüche 1 bis 6, dadurch gekennzeichnet, daß die Behandlungstemperatur im Bereich von 470 bis 490 °C liegt.

8. Verfahren nach einem der Ansprüche 1 bis 7, dadurch gekennzeichnet, daß die Behandlungstemperatur, nachdem sie erreicht worden ist, während einer Dauer von 15 Minuten bis 3 Stunden aufrechterhalten wird.

9. Verfahren nach einem der Ansprüche 1 bis 8, dadurch gekennzeichnet, daß es in einem geschlossenen Raum durchgeführt wird, in dem Träger für die Artikel aus Kristall und Mittel zum Verdampfen des Behandlungsreagens im Inneren des Raums vorhanden sind.

10. Verfahren nach einem der Ansprüche 1 bis 8, dadurch gekennzeichnet, daß man mit einer Öffnung versehene Artikel, wie Gläser, Fläschchen, Karaffen, Kannen und andere derartige Artikel, behandelt, wobei man die gewünschte Menge Behandlungsreagens in Pulverform ins Innere des betreffenden Artikels einbringt, die Öffnung mit einer Platte aus einem der Behandlungstemperatur widerstehenden Material, zum Beispiel Graphit, verschließt, die im oberen Teil des Artikels angebracht ist und eventuell von einem Haltemittel durchdrungen ist, das ins Innere des Artikels hineinreicht, und man anschließend das Ganze auf die Behandlungstemperatur bringt, um das Pulver zu verdampfen.

11. Verfahren nach einem der Ansprüche 1 bis 8, dadurch gekennzeichnet, daß man mit einer Öffnung versehene Artikel, wie Gläser, Fläschchen, Karaffen, Kannen und andere derartige Artikel, behandelt, wobei man eine Platte aus einem der Behandlungstemperatur widerstehenden Material, zum Beispiel Graphit, vorsieht, die zum Verschließen der Öffnung im oberen Teil des Artikels angebracht ist und einen Stab trägt, der ins Innere des Artikels hineinreicht und ein Schiffchen trägt, in das das pulverförmige behandelnde Reagens eingefüllt ist, und man anschließend das Ganze erhitzt, um das Pulver zu verdampfen.

12. Verfahren nach einem der Ansprüche 1 bis 11, dadurch gekennzeichnet, daß man, wenn der Artikel abgekühlt ist, die weißlichen Ablagerungen, die auf der oder den behandelten Oberfläche(n) vorhanden sind, durch einfaches Waschen mit Wasser oder mit Seifenwasser entfernt, woraufhin die behandelte und gewaschene Oberfläche so rein wie im Ausgangszustand ist.

13. Artikel aus Kristall, dadurch gekennzeichnet, daß der Wert der Menge an Blei, das sich verlagert hat, 5 ppb nach ISO-Norm 7086 nicht überschreitet.
